Europäisches Patentamt

European Patent Office

Office européen des brevets

(11) Veröffentlichungsnummer: **0 010 171**
**B1**

(12) **EUROPÄISCHE PATENTSCHRIFT**

(45) Veröffentlichungstag der Patentschrift:
26.08.81

(51) Int. Cl.³: **B 65 D 65/00**, A 61 G 9/00, B 32 B 27/06, B 32 B 7/02

(21) Anmeldenummer: **79103507.4**

(22) Anmeldetag: **19.09.79**

(54) **Mehrschichtige, im wässrigen Medium desintegrierende Folie, und aus dieser Folie hergestellte Behälter und Beutel.**

(30) Priorität: **21.09.78 CH 9887/78**

(43) Veröffentlichungstag der Anmeldung:
**30.04.80 Patentblatt 80/9**

(45) Bekanntmachung des Hinweises auf die Patenterteilung:
**26.08.81 Patentblatt 81/34**

(84) Benannte Vertragsstaaten:
**AT BE CH DE FR GB IT LU NL SE**

(56) Entgegenhaltungen:
**DE-A-1 930 938**
**DE-A-2 637 260**
**FR-A-2 171 507**
**US-A-3 536 563**

(73) Patentinhaber: **Intermedicat GmbH, Gerliswilstrasse 45, CH-6020 Emmenbrücke (CH)**

(72) Erfinder: **Kiefer, Hans, Blumenstrasse 9, D-3509 Ostheim (DE)**
Erfinder: **Brethauer, Ulrich, Oberer Kolberg 11, D-3508 Melsungen (DE)**

(74) Vertreter: **von Kreisler, Alek et al, Deichmannhaus am Hauptbahnhof, D-5000 Köln 1 (DE)**

Mehrschichtige, im wässrigen Medium desintegrierende Folie, und aus dieser Folie hergestellte Behälter und
Beutel

Die vorliegende Erfindung betrifft eine mehrschichtige, im wässrigen Medium desintegrierende Folie sowie Behälter und Beutel, die aus dieser Folie hergestellt werden. Diese Behälter und Beutel dienen zur Aufnahme von menschlichen Ausscheidungen und lassen sich nach Gebrauch problemlos und umweltfreundlich beseitigen.

Ein bevorzugtes Anwendungsgebiet der mehrschichtigen, im wässrigen Medium desintegrierenden Folien gemäss der Erfindung ist ihre Verwendung zur Herstellung von Beuteln, die bei Menschen mit künstlichem Darmausgang oder künstlichem Harnausgang zur Aufnahme der Ausscheidungen dienen.

Nach Angaben in medizinischen Fachzeitschriften gibt es z.Z. in der Bundesrepublik Deutschland ca. 100 000 Menschen mit künstlichem Darmausgang (Ostomie). Man unterscheidet bei der Ostomie folgende Arten:
Colostomie = Dickdarmausgang
Ileostomie = Dünndarmausgang
Ureostomie = Blasenausgang.

Da die Betroffenen nicht mehr die Möglichkeit haben, die Ausscheidung von Stuhl, Darmschleim, Sekreten und Harn willentlich zu kontrollieren, ist eine Versorgung mit einem Auffang-(Beutel)-System erforderlich.

Das zur Aufnahme von Darminhalten benötigte System (Stomaversorgung) umfasst Beutel, Befestigungsbandagen, Hautschutz- und Abdichtmittel.

Die derzeit verwendeten Auffangbeutel werden vorwiegend aus den thermoplastischen Kunststoffen Polyäthylen und Polyvinylchlorid weich hergestellt und sollten nach Möglichkeit absolut flüssigkeitsdicht, geruchsdicht, hautverträglich, knisterfrei, verklebbar mit Haftpflaster, unauffällig zu tragen und mit Inhalt leicht nach dem Tragen zu beseitigen sein.

Bei der Beutelbeseitigung kommt es für Colostomie-Träger mit den herkömmlichen, auf dem Markt befindlichen Beuteln zu Problemen. Ein gefüllter Beutel kann nicht in die Toilette gegeben werden, da wegen der Wasserunlöslichkeit von Polyäthylen und Polyvinylchlorid unweigerlich Verstopfungen im Kanalsystem die Folge wären.

Bisher geschieht die Beutelentsorgung entweder über den Hausmüll oder der Beutel wird in der Toilette ausgestreift und anschliessend mit einer Schere in Teile geschnitten, die sich dann fortspülen lassen. Ausserhalb der Wohnung, z.B. auf Reisen, gestaltet sich die Beutelentsorgung schwieriger. Oft wird ein gefüllter Beutel in Zeitungspapier oder eine Folie eingewickelt und mitgeführt, bis sich eine geeignete Möglichkeit zum Beseitigen bietet.

Die DE-A-19 30 938 beschreibt eine entfernbare Auskleidung für Stechbecken, die dadurch gekennzeichnet ist, dass sie aus einem in Wasser löslichen Film besteht, der auf einer Seite zunächst mit einem wasserunlöslichen Überzug und anschliessend mit einer darauf haftenden Papierschicht bedeckt ist.

Die mehrschichtige Folie gemäss vorliegender Erfindung ist völlig anders aufgebaut. Sie ist ausserdem siegelbar, was bei der entfernbaren Auskleidung für Stechbecken gemäss DE-A-19 30 938 nicht möglich ist. Durch eine andere Anordnung der Beschichtung ist auch das Anwendungsgebiet der mehrschichtigen Folie gemäss vorliegender Erfindung sehr viel breiter als gemäss der DE-A-19 30 938. Zum Beispiel lassen sich Beutel herstellen, was gemäss der DE-A-19 30 938 nicht möglich ist.

Die vorliegende Erfindung stellt sich die Aufgabe, ein spezielles Material zu schaffen, das einerseits in wässrigen Medien desintegrierbar oder zerstörbar und daher umweltfreundlich ist und zum anderen absolut flüssigkeitsdicht, geruchsdicht, hautverträglich, knisterfrei und mit Haftpflastern verklebbar ist.

Diese Aufgabe wird erfindungsgemäss durch die zur Verfügung gestellte mehrschichtige, im wässrigen Medium desintegrierende Folie gelöst.

Die erfindungsgemässe mehrschichtige, im wässrigen Medium desintegrierende Folie ist dadurch gekennzeichnet, dass sie aus einer ersten wasserbeständigen Schicht, einer weiteren, damit verbundenen zweiten Schicht aus einem wasserlöslichen, natürlichen oder synthetischen Polymeren und einer mit diesen beiden Schichten verbundenen, desintegrierbaren dritten Schicht aus nicht wasserlöslichem hydrophilen, natürlichen oder synthetischen Polymeren besteht.

Die erste wasserbeständige und wasserunlösliche Schicht besteht z.B. aus einer siegelbaren, synthetischen Schmelzkleberkomposition, einem siegelbaren, synthetischen (Siegel)Lack, einer thermoplastischen Folie, einer Elastomerfolie oder einem wasserbeständigen Papier aus natürlichen oder synthetischen Rohstoffen. Diese erste wasserunlösliche Schicht kann eine Dicke von 2–20 µm, vorzugsweise von 3–8 µm, aufweisen.

Geeignete Schmelzkleber (hot melts) werden aus filmbildenden Hochpolymeren zusammen mit klebenden Rohstoffen wie Kolophonium, Cumaron-, Inden- oder Kohlenwasserstoffharzen hergestellt.

Typische Zusammensetzungen sind z.B. Polyamid (mittleres Molekulargewicht = 10 000), Polyisobutylen, Polyterpenharz
oder
Polyvinylacetat, Polyäthylen, Terpenphenolharz.

Thermoplastische Folien oder Schichten können aus z.B. Polyäthylen-, Polypropylen-, Polyamid-, oder Polyesterhomo- oder Copolymerisaten aufgebaut werden. Siegelbare bzw. verschweissbare Elastomere werden auf Basis Styrol-Butadien-Styrol oder Styrol-Isopren-Styrol oder auf Äthylen-Propylen-Kautschuk (EPDM) modifizierten Polyäthylenhomo- oder Copolyme-

risaten eingesetzt.

Wasserbeständige, papierähnliche Bahnen werden z.B. aus Polyäthylenendlosfasern oder aus einer Polyäthylenpulpe hergestellt.

Die zweite wasserlösliche Schicht besteht aus einem wasserlöslichen Material natürlicher, teilsynthetischer oder synthetischer Herkunft. Beispiele für geeignete Materialen sind Polyvinylalkohol, Polyäthylenoxid, Hydroxyäthylcellulose, Carboxymethylcellulose, Natriumalginat, Polyacrylsäure, Polyacrylamid, Polyäthylenimin, Polyvinylpyrrolidon, Stärke und Gelatine.

Bevorzugt werden als Materialien Polyvinylalkohol oder teilweise verseiftes Polyvinylacetat.

Diese zweite wasserlösliche Schicht kann eine Dicke von 10 bis 100 μm, vorzugsweise von 20 bis 40 μm, aufweisen.

Die dritte, nicht wasserlösliche, jedoch im Wasser eventuell zusätzlich unter mechanischer Einwirkung desintegrierende Schicht, kann z.B. aus Cellulosepapier in Tissuequalitäten, Kraftpapier, nichtgebundenen Vliesstoffen oder ähnlichen Materialien natürlichen oder synthetischen Ursprungs mit glatten oder auch strukturierten Oberflächen bestehen. Diese Schicht kann in gewissem Umfange wasserabweisenden Charakter haben oder wasserabweisend ausgerüstet sein.

Die Dicke dieser dritten Schicht beträgt 30 μm bis 150 μm, vorzugsweise 40 μm bis 100 μm, kann aber im Falle strukturierter Oberflächen bzw. strukturierter Schichten auch grösser als 150 μm sein.

In einer besonderen Ausführungsform betrifft die vorliegende Erfindung einen aus der erfindungsgemässen mehrschichtigen Folie hergestellten Behälter oder Beutel zur Aufnahme von menschlichen Ausscheidungen, der sich leicht entsorgen lässt.

Bei einem solchen Beutel ergeben sich verschiedene Probleme. Er kann nicht nur aus einem wasserlöslichen Werkstoff bestehen, da die Innenseiten des Beutels bereits durch die Körperausscheidungen, die im Falle von Urin völlig wässrig sind, bei Faeces einen Bereich geringer Feuchtigkeit bis weitgehend wässrig umfassen können, angelöst bzw. die gesamte Beutelwand stellenweise aufgelöst werden, wodurch das gesamte Beutelsystem augenblicklich undicht und somit unbrauchbar würde.

Weiterhin ist es wahrscheinlich, dass die Aussenseite eines solchen Beutels durch Schweisseinwirkung oder in die Kleidung eingedrungenes Regenwasser angelöst wird, was ebenfalls zu Undichtigkeiten oder einer Zerstörung führen würde.

Das Problem ist also, einen einerseits von innen völlig flüssigkeitsdichten und geruchsdichten und andererseits von aussen mit der Haut verträglichen und vorzugsweise undurchsichtigen Beutel herzustellen, der andererseits aber auch leicht in den üblichen Abwässerentfernungsanlagen zerstörbar ist.

Erfindungsgemäss wird dies dadurch erreicht, dass der Beutel aus der erfindungsgemässen mehrschichtigen Folie besteht. Dabei ist die Innenseite des Beutels, die mit den Ausscheidungen in Kontakt kommt, die erste wasserunlösliche Schicht der Folie, die z.B. in Form eines Lakkes, Schmelzklebers, eines wasserbeständigen Papiers, einer Thermoplastfolie oder Elastomerfolie vorliegt.

Diese erste oder – im Falle des Beutels – Innenschicht ist einerseits genügend fest, um absolut flüssigkeitsdicht und geruchsdicht zu sein, aber zum anderen mechanisch zerstörbar, so dass ein Abbau ihres Inhalts möglich ist.

Auf dieser ersten inneren Schicht ist die zweite Schicht aus wasserlöslichem polymerem Material auflaminiert.

Auf dieser zweiten Schicht oder mittleren Schicht ist dann eine äussere Schicht auflaminiert, die die Aussenwände des Beutels darstellt und z.B. aus einer Zellstoffschicht oder Kraftpapier besteht.

Die feutigkeitsundurchlässige erste oder innere Schicht sollte eine geringe Wanddicke haben. Beispielsweise kommen Dicken von 2 bis 20 μm, vorzugsweise von 3 bis 8 μm in Frage.

Die äussere oder dritte Schicht sollte den Tragekomfort erhöhen und vorzugsweise undurchsichtig und gleichzeitig wasserabweisend ausgestattet sein.

Die Beutelaussenseite wäre somit bei einer durchschnittlichen Tragedauer von ca. 8 Stunden gegen äussere Feuchtigkeitseinwirkung oder Körperschweiss ausreichend isoliert. Der aus einer derartigen Verbundfolie bestehende Beutel kann direkt in die Toilettenschüssel, vorzugsweise in die Ablauföffnung, die bei allen Toilettenbecken immer mit Wasser gefüllt ist, gegeben werden.

Der Auflösevorgang vollzieht sich dann schrittweise. Zuerst wird die äussere Schicht oder Beschichtung, z.B. eine Zellstoffschicht, aufgeweicht bis es zum Ablösen von der als Trägermaterial (Trägerschicht) vorgegebenen wasserlöslichen Folienmittelschicht kommt. Im weiteren Verlauf wird die wasserlösliche Schicht aufgelöst. Ungelöst bleibt die innere wasserundurchlässige Schicht in Form eines dünnen Films, der wegen der geringen Wanddicke keine nennenswerte mechanische Festigkeit hat. Beim Spülvorgang im Toilettenbecken reisst dieser verbliebene, weil wasserunlösliche und die Ausscheidung noch umhüllende Folienfilm durch mechanische Einwirkungen im Ablaufsystem ein und alle Komponenten können problemlos in die Kanalisation geleitet werden.

Die Beutel aus Folien gemäss der Erfindung bieten noch weitere Vorteile gegenüber herkömmlichen Beutelsystemen aus thermoplastischen Folienmaterialien. Es ist bekannt, dass bei unmittelbarem Kontakt der Haut mit thermoplastischen wasserundurchlässigen Folien es besonders in diesem Bereich wegen behinderter Hautatmung zu Schweissabsonderungen kommt, was als unangenehm empfunden wird. Wählt man bei direktem Kontakt mit der Haut eine atmungsaktive Schicht wie z.B. eine Zellstoffschicht, kann die Haut besser atmen.

Schweissabsonderungen werden dadurch vermieden. Ebenfalls ist durch eine Zellstoffschicht die Sicht auf den Beutelinhalt versperrt, was bei transparenten Folien einen unangenehmen Anblick bedeuten würde.

Weiterhin ist bekannt, dass Polyvinylalkoholfolien eine extrem niedrige Gas- und Aromadurchlässigkeit im Gegensatz zu Folien aus Polyäthylen und Polyvinylchlorid haben. Die übelriechenden Darmgase können den Patienten und dessen Umgebung nicht mehr belästigen, was bei sozialen Begegnungen auch ein äusserst wichtiger psychologischer Faktor ist. Polyvinylalkoholfolie ist weder haut- noch schleimhautreizend und physiologisch unbedenklich, zeigt in Abwasser keine phytotoxische Wirkung und ist in Kläranlagen mit adaptierter biologischer Klärstufe abbaubar.

Die Erfindung wird anhand der Zeichnungen weiter erläutert:

Fig. 1 ist eine Ansicht der erfindungsgemässen mehrschichtigen, im wässrigen Medium desintegrierenden Folie.

Fig. 2 ist die Ansicht eines erfindungsgemässen Beutels, der aus der erfindungsgemässen Folie hergestellt worden ist.

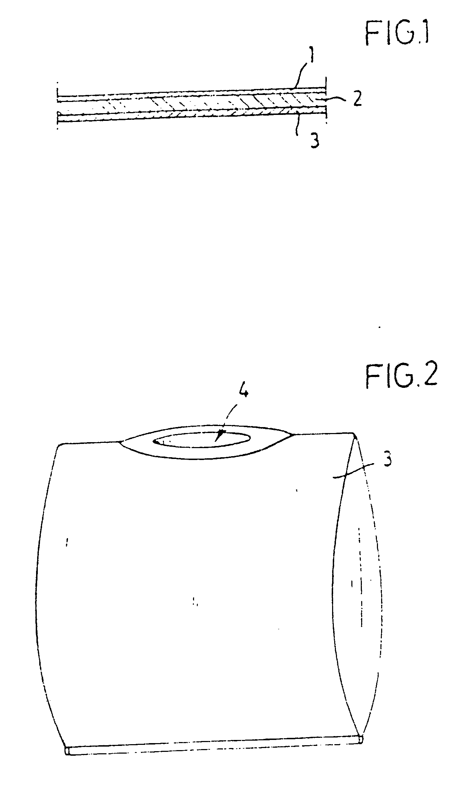

Die Folie gemäss Fig. 1 besteht aus einer ersten wasserbeständigen und wasserunlöslichen Schicht (1), einer damit verbundenen wasserlöslichen zweiten Schicht (2) und einer damit verbundenen nicht wasserlöslichen dritten Schicht (3).

Der erfindungsgemässe Auffangbeutel zur Aufnahme von Körperausscheidungen ist aus der erfindungsgemässen Verbundfolie gefertigt, die aus drei Schichten (1, 2, 3) aufgebaut ist, die folgende Eigenschaften bzw. Funktionen haben:

Die erste Schicht (1) im konfektionierten Beutel oder Behälter innen liegend und mit den Ausscheidungen direkt in Kontakt kommend, besteht aus einem wasserunlöslichen, filmbildenden Material, das in der Dicke entsprechend seiner mechanischen Festigkeit variiert wird, um eine weitgehende Zerstörung unter den Entsorgungsbedingungen zu gewährleisten.

Die zweite, als Träger zu definierende Schicht (2), die dem fertigen Behälter eine ausreichende mechanische Stabilität bringt, ist eine durch Wasser in relativ kurzer Zeit auflösbare Schicht.

Die dritte Schicht (3) die im fertigen Behälter als aussen liegende Beschichtung anzusehen ist, dient zur Erhöhung des Tragekomforts, als eine die Hautatmung nicht behindernde und dadurch schweissunterbindende Auflage, die weiterhin den direkten Feuchtigkeitseinfluss auf die wasserlösliche Schicht verhindert. Sie kann in gewissem Umfange wasserabweisenden Charakter haben oder wasserabweisend ausgerüstet sein.

Der Beutel zum Auffangen der menschlichen Ausscheidungen weist eine Öffnung (4) auf, die zur Einleitung der menschlichen Ausscheidungen vorgesehen ist.

Es ist auch möglich, dass eine Teilfläche der Aussenseite des Auffangbeutels mit einer selbstklebenden Schicht ausgestattet ist.

Ferner kann der Auffangbeutel zur Einleitung menschlicher Ausscheidungen mit einem ableitenden Katheter verbunden sein.

Die Herstellung der erfindungsgemässen mehrschichtigen Verbundfolie erfolgt nach bekannten Herstellungsverfahren zur Herstellung von laminierten Folien.

Geeignete Verfahren zur Herstellung der Verbundfolie sind:

1. Auf die dritte, als Bahn vorgesehene Papierschicht wird im Extrusionsverfahren über eine Breitschlitzdüse die mittlere, zweite Schicht aus Polyvinylalkohol aufextrudiert.

In einem weiteren Arbeitsgang wird durch Walzenauftrag oder über eine Breitschlitzdüse die wasserunlösliche, siegelbare erste Schicht auf die zweite Schicht aufkaschiert.

2. Eine vorgegebene dritte Papierschicht und eine vorgegebene zweite Schicht, bestehend aus einer Flachfolie oder Blasextrusionsfolie aus Polyvinylalkohol, werden, eventuell unter Verwendung eines Haftvermittlers, zusammenkaschiert.

In einem weiteren Arbeitsgang wird durch Walzenauftrag oder über eine Breitschlitzdüse die wasserunlösliche, siegelbare erste Schicht auf die zweite Schicht aufkaschiert.

Der Aufbau von erfindungsgemässen mehrschichtigen Folien, die zur Herstellung der Auffangbeutel verwendet werden, wird in den folgenden Beispielen geschildert.

Beispiel 1

Die erste, innenliegende Schicht besteht aus einer nach bekannten Schweissverfahren siegelbaren, nicht wasserlöslichen Polymerfolie aus thermoplastischem Polyäthylen niedriger Dichte in einer Folienstärke von 4 μm Dicke. Als Trägerschicht bzw. mittlere Schicht dient eine 50 μm dicke Folie aus Polyvinylalkohol oder teilweise verseiftem Polyvinylacetat, die in einer einstellbaren Zeit in Wasser auflösbar ist. Die äussere Schicht besteht aus Natronkraftpapier.

Beispiel 2

Als erste Schicht wird ein handelsüblicher hot melt-Kleber (Schmelzkleber) in einer Dicke von 2 μm verwendet, die Trägerschicht besteht aus Polyäthylenoxidfolie mit 60 bis 80 μm Dicke. Die äussere Schicht besteht aus Natronkraftpapier oder Zellstoff.

**Patentansprüche**

1. Mehrschichtige, im wässrigen Medium desintegrierende Folie, dadurch gekennzeichnet, dass sie aus einer ersten wasserbeständigen Schicht (1), einer weiteren damit verbundenen zweiten Schicht (2) aus einem wasserlöslichen, natürlichen oder synthetischen Polymeren und einer mit diesen beiden Schichten verbundenen, desintegrierbaren dritten Schicht (3) aus nicht wasserlöslichem hydrophilen, natürlichen oder synthetischen Polymeren besteht.

2. Mehrschichtige Folie nach Anspruch 1, dadurch gekennzeichnet, dass die erste, wasserunlösliche Schicht (1) aus einer siegelbaren synthetischen Schmelzkleberkomposition, einem siegelbaren, synthetischen Siegellack, einer Thermoplastfolie, einer Elastomerfolie oder einem wasserbeständigen Papier besteht.

3. Mehrschichtige Folie nach Ansprüchen 1 und 2, dadurch gekennzeichnet, dass die erste, wasserunlösliche Schicht (1) eine Dicke von 2 bis 20 µm, vorzugsweise von 3 bis 8 µm hat.

4. Mehrschichtige Folie nach Anspruch 1, dadurch gekennzeichnet, dass die zweite, wasserlösliche Schicht (2) aus Polyvinylalkohol oder teilweise verseiftem Polyvinylacetat besteht.

5. Mehrschichtige Folie nach Ansprüchen 1 und 4, dadurch gekennzeichnet, dass die zweite wasserlösliche Schicht (2) eine Dicke von 10 bis 100 µm, vorzugsweise von 20 bis 40 µm hat.

6. Mehrschichtige Folie nach Anspruch 1, dadurch gekennzeichnet, dass die dritte wasserunlösliche hydrophile Schicht (3) aus Kraftpapier besteht.

7. Mehrschichtige Folie nach Ansprüchen 1 umd 6, dadurch gekennzeichnet, dass die dritte wasserunlösliche Schicht (3) eine Dicke von 30 µm bis 150 µm, vorzugsweise von 40 µm bis 100 µm aufweist.

8. Behälter aus einer mehrschichtigen Folie nach Ansprüchen 1 bis 7, dadurch gekennzeichnet, dass die erste wasserunlösliche Schicht (1) auf der Innenseite des Behälters, die zweite wasserlösliche Schicht (2) als mittlere Schicht und die wasserunlösliche hydrophile Schicht (3) als äussere Schicht angeordnet ist.

9. Beutel zum Auffangen menschlicher Ausscheidungen aus einer mehrschichtigen Folie nach Ansprüchen 1–8, dadurch gekennzeichnet, dass in der Wand des Beutels eine Öffnung (4) zur Einleitung der menschlichen Ausscheidungen vorgesehen ist.

10. Beutel aus einer mehrschichtigen Folie nach Ansprüchen 1 bis 9, dadurch gekennzeichnet, dass eine Teilfläche seiner Aussenseite mit einer selbstklebenden Schicht ausgestattet ist.

11. Beutel aus einer mehrschichtigen Folie nach Ansprüchen 1 bis 10, dadurch gekennzeichnet, dass er zur Einleitung menschlicher Ausscheidungen mit einem ableitenden Katheter verbunden ist.

## Patent Claims

1. A multilayer sheet disintegrable in aqueous medium, characterized in that it consists of a first water-resistant layer (1); a further second layer (2), made from a water-soluble natural or synthetic polymer, bonded to the first layer, and a disintegrable third layer (3) bonded to these two layers and consisting of a non-water-soluble hydrophilic natural or synthetic polymer.

2. A multilayer sheet according to claim 1, characterized in that the first water-insoluble layer (1) is made of a sealable synthetic hot-melt composition, a sealable synthetic sealing lacquer or varnish, a thermoplastic film, an elastomeric film or a water-resistant paper.

3. A multilayer sheet according to claims 1 and 2, characterized in that the first water-insoluble layer (1) has a thickness of 2 to 20 microns and preferably of 3 to 8 microns.

4. A multilayer sheet according to claim 1, characterized in that the second water-soluble layer (2) consists of polyvinyl alcohol or partially saponified polyvinyl acetate.

5. A multilayer sheet according to claims 1 and 4, characterized in that the second water-soluble layer (2) has a thickness of 10 to 100 microns and preferably of 20 to 40 microns.

6. A multilayer sheet according to claim 1, characterized in that the third water-insoluble hydrophilic layer (3) consists of kraft paper.

7. A multilayer sheet according to claims 1 and 6, characterized in that the third water-insoluble layer (3) has a thickness of 30 to 150 microns and preferably of 40 to 100 microns.

8. A receptacle made of a multilayer sheet according to claims 1 to 7, characterized in that the first water-insoluble layer (1) is arranged on the inside of the receptacle, the second water-soluble layer (2) is arranged as the central layer and the water-insoluble hydrophilic layer (3) is arranged as the outside layer.

9. A bag for collecting human excretions, said bag being made of a multilayer sheet according to claims 1 to 8, characterized in that an opening (4) for introducing the human excretions is provided in the wall of the bag.

10. A bag made of a multilayer sheet according to claims 1 to 9, characterized in that a partial area of its outside is provided with a self-stickung layer.

11. Bag made of a multilayer sheet according to claims 1 to 10, characterized in that it is provided with a draining catheter for introducing human excretions.

## Revendications

1. Feuille à plusieurs couches, se désintégrant dans un milieu aqueux, caractérisée en ce qu'elle est constituée d'une première couche (1) résistant à l'eau, d'une autre couche donc une seconde couche (2) assemblée à la première, faite d'un polymère naturel ou synthétique, soluble dans l'eau, et d'une troisième couche (3) capable de se désintégrer, assemblée aux deux premières couches, faite d'un polymère naturel ou synthétique hydrophile, insoluble dans l'eau.

2. Feuille à plusieurs couches selon la revendication 1, caractérisée en ce que la première couche (1) insoluble dans l'eau, consiste en une composition d'adhésif fusible synthétique, scellable, un vernis à cacheter synthétique, scellable, une feuille de thermoplaste, une feuille d'élastomère ou un papier résistant à l'eau.

3. Feuille à plusieurs couches selon l'une des revendications 1 ou 2, caractérisée en ce que la première couche (1) insoluble dans l'eau a une épaisseur comprise entre 2 et 20 µm de préférence entre 3 et 8 µm.

4. Feuille à plusieurs couches selon la revendication 1, caractérisée en ce que la seconde couche (2) soluble dans l'eau est faite d'alcool polyvinylique ou d'acétate de polyvinyle partiellement saponifié.

5. Feuille à plusieurs couches selon l'une des revendications 1 ou 4, caractérisée en ce que la seconde couche (2) soluble dans l'eau a une épaisseur comprise entre 10 et 100 μm, de préférence entre 20 et 40 μm.

6. Feuille à plusieurs couches selon la revendication 1, caractérisée en ce que la troisième couche (3) hydrophile insoluble dans l'eau est faite de papier kraft.

7. Feuille à plusieurs couches selon l'une des revendications 1 ou 6, caractérisée en ce que la troisième couche (3) insoluble dans l'eau a une épaisseur comprise entre 30 et 150 μm, de préférence entre 40 et 100 μm.

8. Récipient constitué d'une feuille à plusieurs couches selon l'une quelconque des revendications 1 à 7, caractérisé en ce que la première couche (1) insoluble dans l'eau est disposée sur la face interne du récipient, la seconde couche (2) soluble dans l'eau sert de couche intermédiaire et la troisième chouche (3) hydrophile, insoluble dans l'eau est la couche extérieure.

9. Sachet de réception des excrétions humaines, constitué d'une feuille à plusieurs couches selon l'une quelconque des revendications 1 à 8, caractérisé en ce que dans la paroi du sachet est prévu un orifice (4) pour l'introduction des excrétions humaines.

10. Sachet constitué d'une feuille à plusieurs couches selon l'une quelconque des revendications 1 à 9, caractérisé en ce qu'une surface partielle de sa face extérieure est recouverte d'une couche auto-collante.

11. Sachet constitué d'une feuille à plusieurs couches selon l'une quelconque des revendications 1 à 10, caractérisé en ce qu'il est relié à un cathéter de dérivation pour l'introduction des excrétions humaines.

FIG.1

FIG.2